# EUROPEAN PATENT APPLICATION

(11) **EP 4 838 110 A1**
(43) Date of publication of application: **11.11.2026**
(21) Application number: 25174397.7
(22) Date of filing: 06.05.2025
(51) Int. Cl.: F16F 7/116

(54) **TUNABLE MASS DAMPER AND BUILDING WITH TUNABLE MASS DAMPER**

(71) Applicant: Wölfel Engineering GmbH & Co. KG., 97204 Höchberg (DE)
(72) Inventor: Zech, Dr. Philipp, 97204 Höchberg (DE); Eckstein, Dr. Manuel, 97204 Höchberg (DE)
(74) Representative: Keil & Schaafhausen Patentanwälte PartGmbB

(57) **Abstract**

The invention relates to a tunable mass damper (1) for attachment to a technical device (100), preferably a building and/or a machine, wherein the tunable mass damper (1) comprises: a damping mass (2); a spring device (3) comprising a central fixing portion (31) that is configured to be connected to the technical device (100), wherein the spring device (3) comprises at least one spring arm (32) that connects the damping mass (2) mechanically to the fixing portion (31), wherein a connection point (33) of the damping mass (2) on the spring arm (32), at which the damping mass (2) is fixed to the spring arm (32), is adjustable, so that an effective spring length (L) of the spring arm (32) is changed through adjustment of the connection point (33) on the spring arm (32); and at least one elastomer cushion (4) for vibration damping, wherein the elastomer cushion (4) comprises a first contact side (41) and a second contact side (42) that are opposite to each other, wherein the first contact side (41) contacts the damping mass (2), and wherein the spring arm (32) contacts the second contact side (42) with a contact area (34). The contact area (34) between the spring arm (32) and the elastomer cushion (4) automatically changes when the effective spring length (L) of the spring arm (32) is changed. The invention further relates to a building (200), preferably a tall, slender building, comprising at least one tunable mass damper (1).

## Description

The present invention relates to a tunable mass damper for attachment to a technical device, preferably a building and/or a machine, wherein the tunable mass damper comprises a damping mass, a spring device comprising a central fixing portion that is configured to be connected to the technical device, wherein the spring device comprises at least one spring arm that connects the damping mass mechanically to the fixing portion, wherein a connection point of the damping mass on the spring arm, at which the damping mass is fixed to the spring arm, is adjustable, so that an effective spring length of the spring arm is changed through adjustment of the connection point on the spring arm, and at least one elastomer cushion for vibration damping, wherein the elastomer cushion comprises a first contact side and a second contact side that are opposite to each other, wherein the first contact side contacts the damping mass, and wherein the spring arm contacts the second contact side with a contact area. The present invention further relates to a building with a tunable mass damper.

Tunable mass dampers are commonly used to dampen vibrations in technical devices. A well-known application, for example, is to attach a tunable mass damper to a technical machine that exhibits undesired vibrations locally, which can be mitigated by means of one or more tunable mass dampers. Furthermore, another application is to attach a tunable mass damper to a building, for example, a wind turbine, to mitigate vibrations of the building.

EP 1 780 440 A1 discloses a vibration suppression apparatus and a Stirling engine comprising said vibration suppression apparatus. The vibration suppression apparatus comprises vertically layered leaf springs that are connected to the Stirling engine. At the end of spring arms of the leaf springs, a damper mass is attached. Further, between the damper mass and one of the leaf springs, a gel body is attached to the surface of one of the leaf springs. The gel body contacts the damper mass with a first surface and contacts the leaf spring with a second surface that is opposite to the first surface. The gel body is formed of an elastomer. When the gel body is sandwiched and compressed between the leaf spring and the damper mass, a damping effect is introduced by the gel body.

Further, besides the vibration suppression apparatus disclosed in EP 1 780 440 A1, tunable mass dampers according to the above-mentioned configuration are known. In contrast to the vibration suppression apparatus mentioned in EP 1 780 440 A1, tunable mass dampers allow the effective length of the spring arms to be adjusted. In the context of this application, the effective spring length is the length of a spring that is determined at one point by the connection to the damping mass and at another point by the connection of the spring to another body, such as a building, a machine or the like. By changing the effective length of the spring, the stiffness of the spring is varied. Thus, the effective length of the at least one spring arm is directly related to the eigenfrequency of the spring and thus to the eigenfrequency of the entire tunable mass damper. The eigenfrequency, also called natural frequency or resonant frequency, of an object is the frequency at which it tends to vibrate when it is disturbed and then allowed to vibrate freely without ongoing external forces. This adjustability makes it possible to tune the eigenfrequency of the tunable mass damper to a specific frequency. Usually tunable mass dampers of the described type allow adjustability of the eigenfrequency in the range of 40 to 300 Hz. This can be, for example, the frequency of an unwanted vibration of a machine, a building or the like. Similarly to EP 1 780 440 A1, damping is introduced by interposing an elastomer cushion between the at least one spring arm and the damping mass.

The magnitude of the damping is determined by the damping ratio D (or Lehr's damping) which can be calculated using: $D = \frac{d}{2 \sqrt{m ∗ k}}$ where *d* is the physical damping coefficient, *m* is the damper moving mass and the *k* is the stiffness of the spring. Thus, the magnitude of the damping at a specific setting of the tunable mass damper depends on the stiffness of the at least one spring arm, i.e. *k*, the moving mass of the damper, i.e. *m*, and on the size of the contact area with the elastomer cushion. Since the latter two are essentially constant in the tunable mass damper described, adjusting the stiffness causes the level of damping to also vary along the tunable mass damper's adjustment range. For example, when keeping *m* and d constant, an increase in the stiffness of the spring *k* leads to a decrease in damping ratio D. Thus, the amount of damping can differ significantly with different settings of the tunable mass damper. However, this property of the tunable mass damper according to the prior art is undesirable since it renders precise adjustment of the damper considerably more difficult. In the following, exemplary scenarios are outlined. It is assumed that a machine vibrates with a certain unwanted frequency that is to be damped. In this case, it is preferred that the natural frequency of the tunable mass damper matches the unwanted frequency. It may be the case that the tunable mass damper is set in such a way that its natural frequency is not equal to the unwanted frequency and a damping effect A is achieved. However, it is also possible that the tunable mass damper is tuned such that its natural frequency matches the unwanted frequency, resulting in damping effect B. Due to the frequency dependency of the damping effect, there may be cases in which damping effect A is higher than damping effect B. In other words, due to the frequency dependency of the damping effect, it cannot be taken for granted that an optimal degree of damping can be achieved by setting the natural frequency of the tunable mass damper to the unwanted frequency.

It is therefore an object of the present invention to suggest a tunable mass damper that enables to regulate of the amount of damping when the spring length is adjusted.

This problem is solved by the tunable mass damper according to claim 1 and the building according to claim 17. Preferred embodiments of the invention are evident from the dependent claims.

The tunable mass damper according to a first aspect of the present invention is configured to be attached to a technical device. The technical device may preferably be a building and/or a machine. Preferably the building may be a tall slender building such as a wind turbine. The machine may for example be any kind of technical machine that exerts vibrations such as a motor, a generator, a compressor or the like.

The tunable mass damper comprises a damping mass. The damping mass may, for example, have a cylindrical shape, a hollow-cylindrical shape, be cuboid or the like. Preferably, the damping mass is made of a high-density material such as a metal, a metal alloy or the like. For example, the damping mass may be made of steel, tungsten or a similar high-density material. The weight of the damping mass may be in the range of 0.01 to 100 kg, preferably in the range of 0.1 to 10 kg. The tunable mass damper may, for example, be configured to comprise an eigenfrequency in the range of 10 to 500 Hz, preferably 40 to 300 Hz.

The tunable mass damper further comprises a spring device comprising a central fixing portion that is configured to be connected to the technical device. The spring device may comprise a substantially plate-like shape. The spring device may be preferably made of a metal, a metal alloy or the like. The spring device may be rotationally symmetrical along an axis. It may also be possible that the spring device may be axially symmetrical. Furthermore, it may also be possible that the spring device has one or more rotational mirror axes. The central fixing portion is configured to be connected to the technical device. The central fixing portion may, for example, be formed by a through-hole in the spring, by a magnet, a similar connecting element or the like. The central fixing portion may also extend through a through hole or an opening in the damping mass. The central fixing portion may also be formed as a single piece or may comprise a multi-part design.

The spring device comprises at least one spring arm that connects the damping mass mechanically to the fixing portion. The at least one spring arm may extend from the central fixing portion. In other words, the central fixing portion may be located at one end of the at least one spring arm. It is imaginable that the spring arm may have a straight shape, a curved shape or a shape that resembles at least partially the shape of a ring. For example, it may be conceivable that a spring arm could be at least partially shaped like a semicircle, a quarter circle or another segment of a circle. The mechanical connection may preferably be established by a releasable connecting means such as a bolt and nut or the like.

A connection point of the damping mass on the spring arm, at which the damping mass is fixed to the spring arm, is adjustable, so that an effective spring length of the spring arm is changed through adjustment of the connection point on the spring arm. In other words, the connection point at which the damping mass is attached to the spring arm may be adjusted so that the connection point along the spring arm is variable relative to the central fixing portion. The effective spring length may be the length of one spring arm between the central fixing portion and the respective connection point. The connection point may be adjusted through translation, rotation or the like of the damping mass relative to the at least one spring arm of the spring device.

The elastomer cushion for vibration damping comprises a first contact side and a second contact side that are opposite to each other. The elastomer cushion may comprise an elastic material such that the elastomer cushion may be deformed elastically. The elastomer cushion may preferably comprise a synthetic rubber such as ethylene propylene diene monomer (EPDM) rubber, acrylic rubber, silicone rubber, fluorosilicone rubber, ethylene-vinyl acetate or the like. In a preferred embodiment the elastomer cushion may comprise a foam of a synthetic rubber. The elastomer cushion may preferably be essentially sheet-like or may comprise a plurality of sheet-like sections. The elastomer cushion may comprise a thickness that may be reduced when compressed elastically.

The first contact side of the elastomer cushion contacts the damping mass, and the spring arm contacts the second contact side with a contact area. Thus, the elastomer cushion may be sandwiched between the damping mass and the at least one spring arm. The contact area is a surface are of a spring arm that contacts the second contact side of the elastomer cushion. The elastomer cushion may be elastically compressed by the contact with the damping mass and the spring arm.

According to the present invention, the contact area between the spring arm and the elastomer cushion automatically changes when the effective spring length of the spring arm is changed. In other words, the contact area and the effective spring length are changed in unison. The change of the contact area may be considered as a change in the size of the contact area. By changing the contact area in the course of changing the effective spring length, the degree of damping may be adjusted by changing the size of the contact area with respect to the eigenfrequency of the tunable mass damper. This change in the contact area along the effective spring length makes it possible, for example, to design the contact area in such a way that the tunable mass damper has essentially the same level of damping in the adjustment range of the effective spring length. It may also be possible to design the level of damping to be progressive or regressive along the adjustment range. Other forms of progression of the degree of damping along the adjustment range are also conceivable and possible.

According to an embodiment, the contact area between the spring arm and the elastomer cushion may decrease when the effective spring length increases. Thus, by decreasing the contact area, the amount of damping may be decreased when the effective spring length increases. This may be advantageous because the increased effective spring length reduces the stiffness of the spring and therefore less damping may be required from the elastomer pad to achieve the same amount of damping overall. In this way, by decreasing the contact area the physical damping coefficient *d* may be decreased, wherein simultaneously by increasing the effective spring length the stiffness of the spring *k* may be decreased. Thus, a tunable mass damper may be provided that compensates the decrease in the stiffness of the spring *k* by a decrease in the damping coefficient *d*, such that the damping ration D may be kept essentially constant. In other words, in this way, a tunable mass damper may be provided in which the contact area together with the effective spring length is varied so that a consistent level of damping can be provided over the adjustment range of the at least one spring arm. Preferably, the amount of damping, i.e., the damping ratio D, along the adjustment range of the at least one spring arm may be in the range of 1 to 10 %, preferably in the range of 2 to 5 %. In a preferred embodiment, the amount of damping along the adjustment range of the at least one spring arm may be 2 %.

Preferably, the elastomer cushion may be fixed to the damping mass. The elastomer cushion may, for example, be fixed to the damping mass by an adhesive, a clamping mechanism or the like. Fixing the elastomer cushion to the damping mass may ensure that the elastomer cushion may be fixed in position on the damping mass. The direct connection of the elastomer cushion and damping mass may result in a low-profile design. In addition, further components may be avoided, thus reducing manufacturing costs. The elastomer cushion may preferably be connected to the damping mass at the first contact side. However, it is also conceivable that the elastomer cushion may be connected to the damping mass at another area, for example, a side face or the like. Depending on the design of the elastomer cushion, it may also be conceivable that the elastomer cushion may be fixed to the damping mass by arranging it in a recess in the damping mass. In such a case, it is conceivable that the elastomer pad may be connected to the damping mass by being pressed into a recess or that the recess may comprise an undercut which may fix the elastomer cushion in such a recess.

According to a preferred embodiment, the elastomer cushion may comprise a length along a first direction, a width along a second direction, wherein the first direction and the second direction may at least be locally perpendicular, and wherein the width of the elastomer cushion may decrease along the length of the elastomer cushion. Such a shape may be formed, for example, by a substantially triangular shape, a substantially rectangular shape or the like. It may also be conceivable that such a shape may also be curved and/or arched overall. Preferably, the elastomer cushion may comprise such a shape in the area where the at least one spring arm contacts the elastomer cushion along its entire adjustment range. The area in which the elastomer cushion may be contacted by a spring arm along its adjustment range may be understood as a tuning portion of the elastomer cushion. In other words, a tuning portion may be formed by combining the contact area in each adjustment position of a single spring arm. Preferably, the number of tuning portions of the elastomer cushion equals the number of spring arms. It is conceivable that several tuning portions may be connected to each other by further sections, such as connecting portions, of the elastomer cushion.

According to an aspect of the present invention, the elastomer cushion may be configured to be elastically deformable, wherein a height of the elastomer cushion may span from the first contact side to the second contact side, and wherein the height may be compressed in a section of the elastomer cushion in contact with the contact area by at least 10 %, preferably at least 30 %. It may also be possible that the height may be compressed in a section of the elastomer cushion in contact with the contact area by at least 20 %, preferably at least 45 %. The height, for example, may be compressed by 33% or 50%. This rate of compression may cause the elastomer cushion to be preloaded, which improves the damping effect of the elastomer cushion. Furthermore, the compression may improve the stability and prevent the at least one spring arm from being misaligned relative to the damping mass.

Preferably, the elastomer cushion at least partly may comprise rubber foam, preferably ethylene propylene diene monomer rubber foam, and/or silicone foam, and/or wherein the spring device may comprise a steel material. The rubber foams mentioned offer excellent damping performance combined with high durability and low weight. The use of silicone foam may be advantageous as silicone foam does exhibit essentially constant elastomer properties in the relevant temperature range of -30 to 40 degrees Celsius. Furthermore, rubber foams may be molded into elaborate shapes with little effort, making the elastomer cushions easy to manufacture. It may also be possible to combine different rubber foams in one elastomer cushion. This may be accomplished, for example, by mixing such rubber foams, arranging layers of such rubber foams, combining multiple tuning portions each comprising a particular rubber foam, or the like.

Preferably, in a state in which the elastomer cushion may not be compressed, the elastomer cushion may comprise a substantially uniform thickness in the height dimension. The height dimension, for example, may be understood as the distance between the first surface and the second surface of the elastomer cushion. A uniform thickness may be regarded as a thickness that varies by less than 10%, preferably by less than 5%, and preferably by less than 1%. An elastomer cushion of this kind may be manufactured easily, as no different height levels need to be created during manufacture. As a result, the structure comprising the damping mass, elastomer cushion and at least one spring arm may be simplified, as the areas in contact with the elastomer cushion may be designed in a simple manner.

In an embodiment, the spring arm may comprise a contact section and an adjustment section, wherein the adjustment section may be arranged in a circumferential direction around the central fixing portion and may comprise the connection point, and wherein the contact section may comprise the contact area and may extend in a radial direction to connect the central fixing portion with the adjustment section. In other words, the contact section may be interposed between the central fixing portion and the adjustment section. The circumferential direction may be understood, with respect to the central fixing portion, as a direction that extends around an axis that extends through the central fixing portion in a thickness direction of the spring device. In this case, the circumferential direction extends preferably in a plane that is perpendicular to the axis running through the central fixing portion. The radial direction, on the other hand, may also be understood, with respect to the central fixing portion, as a direction extending perpendicular to the axis that extends through the central fixing portion in a thickness direction of the spring device. In this case, the circumferential direction and the radial direction may thus preferably both lie in the same plane. The adjustment section may be, for example, formed as a slot, an elongated hole or the like. The arrangement along the spring arm mentioned above may separate the area where the spring arm contacts the elastomer cushion, i.e., the contact section, and the area where the spring arm is connected to the damping mass, i.e., the connection point. This may improve the operability and adjustability of the tunable mass damper.

According to an aspect of the present invention, the tunable mass damper may further comprise a cover plate that covers the spring device, wherein the spring device may be disposed between the cover plate and the damping mass. The cover of the spring device may prevent the components of the tunable mass damper from being affected by environmental factors. For example, contamination or mechanical damage may be effectively avoided. Furthermore, it is conceivable that the cover plate may be designed to provide protection against small particles, such as dust particles, and/or liquids. This may be particularly advantageous if the spring device and/or the damping mass, for example, may be made of a material susceptible to corrosion.

In an embodiment, the spring device may comprise at least three spring arms. Further, in an embodiment, the spring device may comprise three spring arms. Preferably, the spring device has exactly three spring arms. The arrangement of three spring arms on the spring device proves advantageous, as this number, on the one hand, requires a comparatively small number of components and, on the other hand, enables a spring device with favorable spring properties to be easily manufactured. Furthermore, it may be preferable that the spring device may comprise at least two spring arms.

Preferably, the spring arms may be formed as a single-piece component and/or the spring device may be formed as a single-piece component. Preferably, the spring device may be separated, machined or the like from a plate-like precursor. Furthermore, it may be preferable for the spring device to be cast in one piece to form a single-piece component. The single-piece construction of the spring device may improve the structural integrity, which in turn may improve the vibrational characteristics of the spring device. Furthermore, this measure may reduce the number of parts required, thereby reducing both manufacturing costs and maintenance requirements.

It is further preferred that the at least three spring arms may be at least essentially identical. Preferably, the spring device may comprise essentially an n-fold rotational symmetry, wherein n is the number of the spring arms. The use of a spring device with rotational symmetry may be preferred because it allows for the spring device to be adjusted relative to the damping mass by means of rotation.

In a preferred embodiment, the spring device may comprise at least three spring arms, wherein each of the spring arms represents a coupling path, and wherein the adjustment of the damping and the adjustment of the stiffness occurs in all coupling paths. It may also be conceivable that the adjustment of the damping and the adjustment of the stiffness may occur simultaneously in all coupling paths. Preferably, the coupling paths may not be aligned parallel to one another.

In an embodiment, a central axis that may be directed perpendicular to the spring arms may run through the central fixing portion, and wherein a center of mass of the damping mass may be located on the central axis. By aligning the central fixing portion with the center of mass of the damping mass, it may be achieved that as few forces as possible act on the point of connection of the tunable mass damper with the technical device. In other words, this arrangement reduces the load on the central fixing portion as much as possible, thus improving the durability of this portion. Furthermore, the center of mass of the damping mass and the rotation axis of the spring device may be coaxially arranged, which may improve the vibration characteristics of the tunable mass damper.

According to an aspect of the present invention, the at least one spring arm may comprise a grip section configured to aid rotation of the spring device. The rotation of the spring device may be understood as a rotation of the spring device relative to the damping mass. The grip section may be formed, for example, as a handle, a bulge, a dent or the like. Furthermore, it is conceivable that the grip section may be configured to be coupled to a tool and/or handled by a user to facilitate the adjustment, for example, by rotation, by translation or the like, of the spring device. This may provide an easy way to adjust the relative position and/or orientation of the spring device to the damping mass with precision.

In a preferred embodiment, the spring device may comprise a first part of an indicating device and the damping mass may comprise a second part of an indicating device, wherein the first part of the indicating device and the second part of the indicating device may be configured to interact in such a way that an information associated with the relative position of the spring device and the damping mass may be derived. For example, the first part of the indication device may be a pointer-like bulge on the spring device. Furthermore, the second part of the indication device may be, for example, a scale-like coding on the damping mass. Depending on the relative positioning, the pointer-like bulge may be assigned to a certain section of the scale-like coding. This may, for example, provide information about the relative angle of rotation, the current setting of the eigenfrequency or the like.

According to a further aspect of the present invention, the above object is solved by the building, preferably a tall, slender building, comprising at least one tunable mass damper according to the first aspect of the present invention described above. For example, it is conceivable that one or more tunable mass dampers may be located inside a tower section of a wind turbine. The arrangement of tunable mass dampers in and/or on buildings permits targeted damping of vibrations. On the one hand, this protects the building, increasing its durability. On the other hand, vibrations that do occur are dampened, which reduces the development of sound waves and thus also lowers noise pollution.

The above and other objects, features and advantages of the present invention will become more apparent from the following description when taken in conjunction with the accompanying drawings, in which preferred embodiments of the present invention are shown by way of an illustrative example. In this context, all the features described and/or illustrated constitute, individually or in any combination, the subject-matter of the invention, irrespective of their summary in the claims or their references.
Figure 1 shows a top figure of a tunable mass damper according to an embodiment of the present invention;
Figure 2 shows the tunable mass damper shown in figure 1 with a different relative rotation of the spring device;
Figure 3 shows a perspective view of the embodiment of the tunable mass damper;
Figure 4 shows a further perspective view of the embodiment of the tunable mass damper;
Figure 5a shows a section taken along the line XI-XI of Fig. 1
Figure 5b shows the section illustrated in Fig. 5a, wherein the tunable mass damper is attached to a technical device;
Figure 6 shows a top view of an elastomer cushion;
Figure 7 shows a building according to an embodiment of the present invention; and
Figure 8 shows an upper end section of the building shown in Fig. 7.

In the figures, identical elements, identically acting elements, or elements of the same kind may be provided with the same reference numerals.

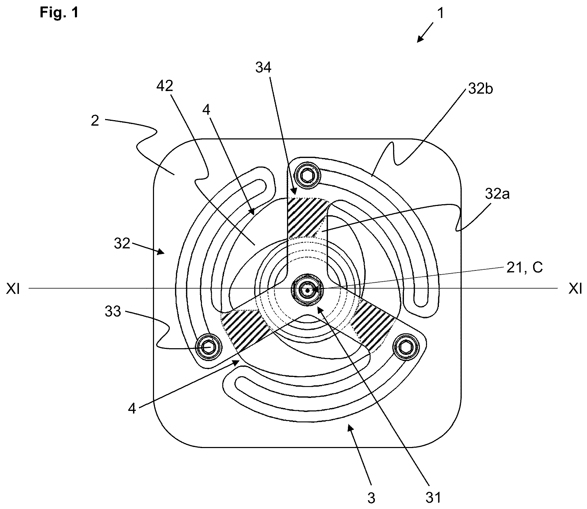

Figure 1 shows a top view of a tunable mass damper 1 according to an embodiment of the present invention. The tunable mass damper 1 has a substantially cuboid damping mass 2. The corners of the cuboid basic shape visible in the top view of Fig. 1 are rounded. In the center of the basic cuboid shape, the damping mass 2 has a cylindrical recess that is formed as a through-hole. The damping mass 2 is made of stainless steel. The center of mass 21 of the damping mass 2 is located in the center of the damping mass 2 coaxially arranged with a central axis C of a spring device 3.

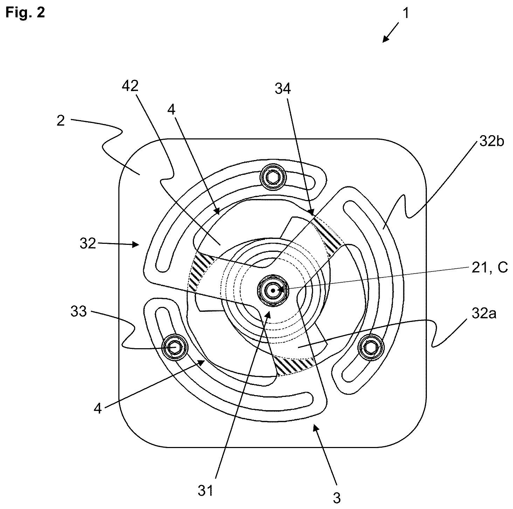

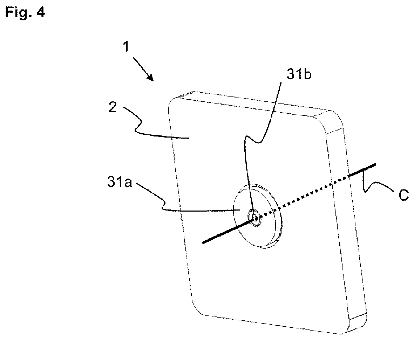

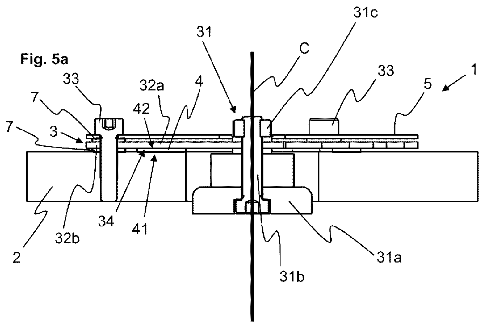

Furthermore, the tunable mass damper 1 comprises the spring device 3. In this view, the elements of tunable mass damper 1 that are obscured by spring device 3, i.e. the elements that are located behind spring device 3 from this viewing direction, are shown as dashed lines. This also applies to the illustration in Fig. 2. The spring device 3 has a centrally arranged central fixing portion 31. The central fixing portion 31 also has a magnetic base 31a, a bolt 31b and a nut 31c. The structure of the central fixing portion 31 will be explained in more detail below in connection with Fig. 4 and Fig. 5a. Three spring arms 32 extend from the central fixing portion 31. Each of the three spring arms 32 has a part that is formed integrally with the central fixing portion 31 and forms a contact section 32a. The contact sections 32a extend at a spacing of 120 degrees. The contact sections 32a extend in a radial direction, starting from the central fixing portion 31. An adjustment section 32b is adjoined integrally to each of the contact sections 32a. The adjustment sections 32b extend in a ring shape around the central fixing portion 31, almost up to the next adjustment section 32a. The adjustment sections 32a each extend in a circumferential direction around the central fixing portion 31. The adjustment sections 32a each have a slot which follows the curved shape of the adjustment sections 32a. The spring device 3 comprises a three-fold rotational symmetry. In other words, the spring device 3 comprises essentially an n-fold rotational symmetry, wherein n is the number of the spring arms 32 of the spring device 3.

The spring device 3 also comprises a connection point 33 on each of the adjustment sections 32a. Each of the connection points 33 is designed as a screw, the head of which rests on the adjustment section 32a and the shaft of which extends through the slotted through-hole of the adjustment section 32a. The shaft also extends into a blind hole in the damping mass 2, which has an internal thread. The external thread of the shaft engages with the internal thread of the respective blind hole, thus securing the screw in the blind hole.

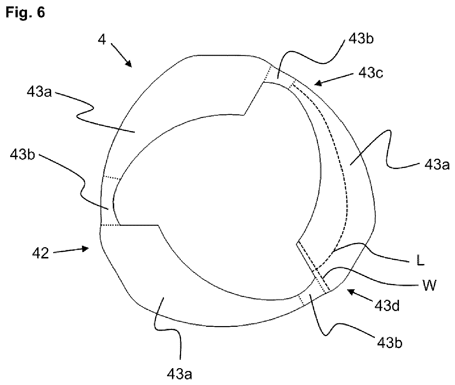

The tunable mass damper 1 also comprises an elastomer cushion 4. The elastomer cushion 4 is described below with reference to Fig. 6, which shows the elastomer cushion 4 of the tunable mass damper 1 shown in Fig. 1 in isolation. The elastomer cushion 4 consists of an EPDM foam. The elastomer cushion 4 has a substantially ring-shaped overall shape. In the top view of Fig. 6, the second surface 42 is visible. On the opposite side, which is not visible in Fig. 6, i.e. on the underside, the first surface 41 of the elastomer cushion 4 is positioned. The elastomer cushion 4 can be divided along its ring-shaped overall shape into different sections, i.e., tuning portions 43a and connecting portions 43b, which are arranged in alternating fashion. A length L of one tuning portion 43a is shown as a broken line. A width W of the tuning portion 43a is also shown as a broken line that is locally perpendicular to the length L. However, a width W that is locally perpendicular to the length L may be provided at every position along the length L. As illustrated, the uncompressed elastomer cushion 4 has a uniform thickness over its entire surface. Thickness is understood to be the distance between the first surface 41 and the second surface 42. Three tuning portions 43a and three connecting portions 43b are arranged in the elastomer cushion 4. Each tuning portion 43a thus extends from one connecting portion 43b to another connecting portion 43b. The direction of extension of a tuning portion 43a from one connecting portion 43b to another connecting portion 43b can be referred to as the length direction of the tuning portion 43a. The tuning portion 43a has a substantially triangular basic shape that is narrower at a first end than at a second end. In other words, the tuning portion 43a has a narrow end and expands progressively from there in the lengthwise direction. In addition, the basic shape of the tuning portion 43a curves clockwise. The connecting portion 43b has a substantially rectangular overall shape and connects a narrow end 43c of a tuning portion 43a to a broad end 43d of a tuning portion 43a.

Furthermore, in the following, the elastomer cushion 4 is described in conjunction with the tunable mass damper's other components, with reference to Fig. 1. The aforementioned elastomer cushion 4 is arranged between the damping mass 2 and the spring device 3. The first surface 41 of the elastomer cushion 4 is fixed over its entire area to the damping mass 2 by means of an adhesive. The second surface 42 is directed towards the spring device 3. The spring device 3 contacts the elastomer cushion 4 in the area of the contact section 32a. The actual area of a tuning portion 43a of the elastomer cushion 4 that is contacted by a contact section 32a at a particular setting of the tunable mass damper 1 is referred to as the contact area 34. The contact area 34 is highlighted in Fig. 1 and Fig. 2 as hatched areas. The size of the contact area 34 depends on the relative position of spring device 3 to damping mass 2. The relative position of spring device 3 to damping mass 2 can be changed by rotating spring device 3 around central axis C. In the present embodiment, the contact area 34 is increased by rotating the spring device 3 relative to the damping mass 2 in a clockwise direction, whereas a counterclockwise rotation reduces the contact area 34.

The effective spring length of a spring arm 32 extends from the central fixing portion 31 over the contact section 32a up to the point in the adjustment section 32b at which the adjustment section 32b is coupled via the connection point 33 to the damping mass 2. Accordingly, the effective spring length of the three spring arms 32 is shortest in the setting shown in Fig. 1 for this embodiment. In this setting, the stiffness of each individual spring arm 32 and thus that of the entire spring device 3 is at its largest. By rotating the spring device 3 counterclockwise relative to the damping mass 2, the effective spring length of each individual spring arm 32 is increased. This reduces the stiffness of each individual spring arm 32 and thus the stiffness of the entire spring device 3.

When the spring device 3 is adjusted relative to the damping mass 2 by rotation, all three spring arms 32 are always displaced at the same time, so that by adjusting each individual spring arm 32, the same effective spring length is obtained for each one. Furthermore, the contact area 34 is simultaneously regulated with the adjustment of the effective spring length of the spring arms 32, whereby the contact sections 32a of the three spring arms 32 are shifted so that the contact area 34 is regulated equally at all three contact sections 32a. In the setting shown in Fig. 1, the largest contact area 34 is achieved when the effective spring length is shortest. Rotating the spring device 3 relative to the damping mass 2 counterclockwise extends the effective spring length of the three spring arms 32a and automatically reduces each of the three contact areas 34. Such a setting of the tunable mass damper 1 with a smaller contact area 34 and a longer effective spring length than in Fig. 1 is shown in Fig. 2. In other words, the adjustment of the contact area 34 and the adjustment of the effective spring length is coupled, since this is effected by the rotation of the spring device 3 relative to the damping mass 2.

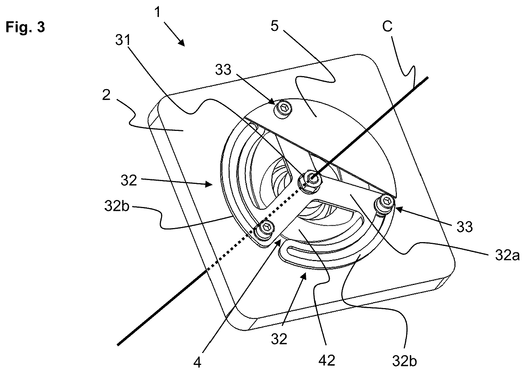

With reference to Fig. 3, a perspective view of the tunable mass damper 1 is described. The tunable mass damper 1 is shown here in the setting as shown in Fig. 1. The cover plate 5, which was omitted in Figs. 1 and 2 for better visibility, is shown in Fig. 3. However, here too, the cover plate 5 is only partially shown for the sake of clarity. The cover plate 5 extends in its entirety as a circular disc entirely over the spring device 3. In other words, the cover plate 5 completely covers the spring device 3 in plan view. However, the cover plate 5 does not rest directly on the spring device 3. As can be seen in Fig. 5a, washers 7 are arranged between the damping mass 2 and the spring device 3 and between the spring device 3 and the cover plate 5, spacing these components apart. The washers 7 are arranged so that the shafts of the connection points 33, which are designed as screws, extend through them. The cover plate 5 has through-holes, wherein the screw heads of the connection points 33 rest on the cover plate and the shafts of the screws extend through the through-holes of the cover plate 5. The shafts of the screws thus extend from the cover plate 5 through the cover plate 5, through a washer 7, through the spring device 3, through a further washer 7 and into a blind hole in the damping mass 2. Furthermore, it can be seen in the perspective view in Fig. 3 that the cuboid damping mass 2 has a substantially square basic shape with a height, with only the peripheral edges being rounded.

Another perspective view is shown in Fig. 4. In this view, the rear side of the tunable mass damper 1 is shown. The damping mass 2 has, as on the front side, a smooth rear side. In this view, the central through-hole of the damping mass 2 is visible in the center, with the central fixing portion 31 extending to the rear side. The central fixing portion 31 extends along the central axis C beyond the surface of the rear side of the damping mass 2, so that it protrudes in this direction from the surface of the rear side of the damping mass 2. The central fixing portion 31 comprises a screw 31b that is inserted from the rear side into the mounting base 31a, as seen in Fig. 4. The head of screw 31b is located on the rear side of the tunable mass damper 1. The screw 31b of the central fixing portion 31 extends along the central axis C through a through-hole of the mounting base 31a. The mounting base 31a has two essentially hollow-cylindrical bodies that are arranged along the central axis C adjacent to each other. These two bodies are, for example, visible in Fig. 5a. At the end of screw 31b, where the head of screw 31b is located, a first hollow cylindrical body of mounting base 31a is provided, which is formed as a permanent magnet. Adjacent to this along the central axis C, a second body of the mounting base 31a is arranged, which has a smaller diameter than the first body. The diameter of the first body and of the second body of the mounting base 31a is, respectively, smaller than the diameter of the through-hole in the damping mass 2. The mounting base 31a is adjoined along the central axis C by the screw 31c of the central fixing portion 31, the mounting base 31a comprising an internal thread that engages with an external thread of the screw 31b. The central fixing portion 31 is thus formed overall by the central area of the spring device 3, which is adjoined by the contact sections 32a, a through-hole, the mounting base 31a, the screw 31b and the nut 31c.

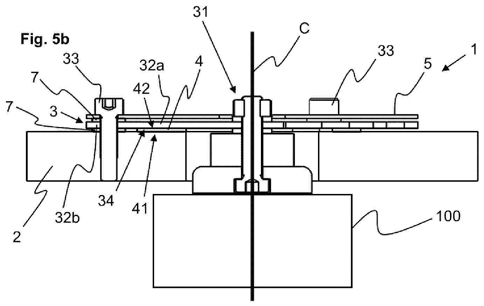

The central fixing portion 31 allows the tunable mass damper 1 to be attached to a technical device 100. Such an application is shown schematically in Fig. 5b. The magnetic mounting base 31a of the central fixing portion 31 is utilized to fix the tunable mass damper 1 to the technical device 100.

The sectional views in Figures 5a and 5b show that the elastomer pad 4 is arranged between the spring device 3 and the damping mass 2. The first surface 41 of the elastomer pad 4 contacts the damping mass 2 and the second surface 42 contacts the contact section 32a of the respective spring arm 32 in the area of the contact area 34. The spring device 3 is pushed by the connection points 33 in the direction of the damping mass 2, exerting a force on the elastomer pad 4 in the area of the respective contact areas 34. This force compresses the elastomer pad 4 in the area of the contact areas 34. This compression affects the thickness of the elastomer pad 4, so that the thickness is reduced by about 33% compared to a state in which the elastomer pad 4 is not compressed.

The process of adjusting the tunable mass damper 1 is now described in relation to Figs. 1 to 6. The relative positioning of the spring device 3 to the damping mass 2 shown in Fig. 1 is considered in the following as an initial position. However, any relative position along the adjustment range can basically be used as an initial position. In the setting of the tunable mass damper 1 shown in Fig. 1, the procedure for changing the relative position of the spring device 3 to the damping mass 2 is outlined below. Initially, the spring device 3 is released from the damping mass 2. For this purpose, the screws are loosened at all three connection points 33, whereby the force that pressed the spring device 3 in the direction of the damping mass 2 is relieved. Because the spring device 3 is no longer pressed in the direction of the damping mass 2, the compressive force of the spring device 3 on the elastomer cushion 4 is reduced, so that the elastomer cushion 4 is compressed less or not at all in the area of the contact areas 34. Subsequently, the relative positioning of the spring device 3 to the damping mass 2 can be changed by means of rotation around the central axis C. This is possible by fixing the damping mass 2 and moving the spring device 3. Similarly, this is also possible by fixing the spring device 3 and moving the damping mass 2. During the adjustment, the spring device 3 is guided along a circular path by the interaction of the connection points 33, i.e. the shafts of the screws, and the elongated holes in the adjustment sections 32b. After reaching the desired relative positioning, for example, the position shown in Fig. 2, re-fixing is carried out in a final step. For this purpose, the screws of the connection points 33 are tightened again, whereby, the spring device 3 and damping mass 2 are fixed to each other as well as the elastomer pad 4 is compressed in the areas of the contact areas 34.

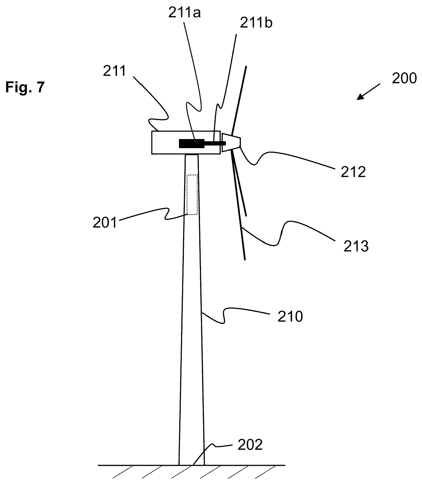

With reference to Fig. 7, a building 200 according to the present invention is hereinafter described. The building 200 shown in Fig. 7 is a wind turbine 200. The wind turbine 200 comprises a tower 210, which rests on the ground with a lower end 202. The tower 210 has a tall, slender, hollow cylindrical design. The tower 210 extends upwards from the lower end 202 to the upper end section 201. A nacelle 211 is connected to the upper end section 201 and thus to the tower 210. The nacelle comprises, inter alia, a generator 211a, which is connected to a rotor hub 212 via a shaft 211b. The rotor hub 212 and the shaft 211b are fixedly connected to one another. Further, the shaft 211b is connected to the generator 211a such that the shaft may rotate relative to the generator 211a. A plurality of blades 213 are arranged on the rotor hub 212.

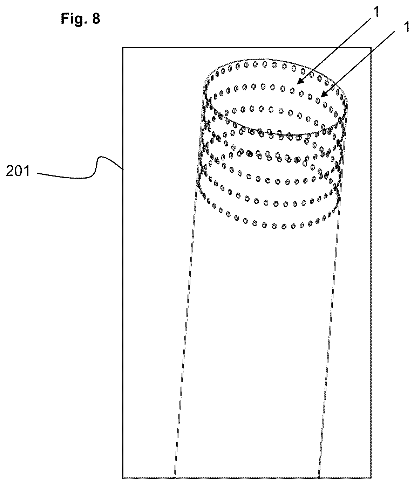

The upper end section 201 of the building 200 of fig. 7 is shown sectionalized in Fig. 8. For the purpose of illustrating the tunable mass dampers 1 positioned on the inside of the tower, the exterior of the tower is represented transparently. A plurality of tunable mass dampers 1 is arranged on the inside of the hollow cylindrical tower outer shell, i.e. on the inside of the tower wall. The tunable mass dampers 1 are arranged in such a way that they form an annular arrangement in the circumferential direction, with the individual tunable mass dampers 1 being arranged at a distance from one another in the circumferential direction. Furthermore, a total of five of these ring-shaped arrangements of tunable mass dampers 1 are arranged at intervals in the longitudinal direction of the tower 210, which extends from the lower end 202 to the upper end section 201. The tunable mass dampers 1 are attached to a surface on the inside of the tower 210 by means of the mounting base 31a.

### Reference numerals:

- 1: tunable mass damper
- 2: damping mass
- 3: spring device
- 31: central fixing portion
- 31a: mounting base
- 31b: bolt
- 31c: nut
- 32: spring arm
- 32a: contact section
- 32b: adjustment section
- 33: connection point
- 34: contact area
- 4: elastomer cushion
- 41: first contact side
- 42: second contact side
- 43a: tuning portion
- 43b: connecting portion

- 43c: narrow end
- 43d: broad end
- 5: cover plate
- 100: technical device
- 200: building
- 201: upper end section
- 202: lower end
- 210: tower
- 211: nacelle
- 211a: generator
- 211b: shaft
- 212: rotor hub
- 213: blade
- C: central axis
- H: height of the elastomer cushion
- L: length of the elastomer cushion
- W: width of the elastomer cushion

## Claims

1. A tunable mass damper (1) for attachment to a technical device (100), preferably a building and/or a machine, wherein the tunable mass damper (1) comprises:
a damping mass (2);
a spring device (3) comprising a central fixing portion (31) that is configured to be connected to the technical device (100),
wherein the spring device (3) comprises at least one spring arm (32) that connects the damping mass (2) mechanically to the fixing portion (31),
wherein a connection point (33) of the damping mass (2) on the spring arm (32), at which the damping mass (2) is fixed to the spring arm (32), is adjustable, so that an effective spring length (L) of the spring arm (32) is changed through adjustment of the connection point (33) on the spring arm (32); and
at least one elastomer cushion (4) for vibration damping,
wherein the elastomer cushion (4) comprises a first contact side (41) and a second contact side (42) that are opposite to each other,
wherein the first contact side (41) contacts the damping mass (2), and
wherein the spring arm (32) contacts the second contact side (42) with a contact area (34),
**characterized in that** the contact area (34) between the spring arm (32) and the elastomer cushion (4) automatically changes when the effective spring length (L) of the spring arm (32) is changed.

2. The tunable mass damper (1) according to claim 1, wherein the contact area (34) between the spring arm (32) and the elastomer cushion (4) decreases when the effective spring length (L) increases.

3. The tunable mass damper (1) according to any one of the preceding claims, wherein the elastomer cushion (4) is fixed to the damping mass (2).

4. The tunable mass damper (1) according to any one of the preceding claims, wherein the elastomer cushion (4) comprises a length (L) along a first direction, a width (W) along a second direction, wherein the first direction and the second direction are at least locally perpendicular, and wherein the width (W) of the elastomer cushion (4) decreases along the length (L) of the elastomer cushion (4).

5. The tunable mass damper (1) according to any one of the preceding claims, wherein the elastomer cushion (4) is configured to be elastically deformable, wherein a height (H) of the elastomer cushion (4) spans from the first contact side (41) to the second contact side (42), and wherein the height (H) is compressed in a section of the elastomer cushion (4) in contact with the contact area (34) by at least 10 %, preferably at least 30 %.

6. The tunable mass damper (1) according to any one of the preceding claims, wherein the elastomer cushion (4) at least partly comprises rubber foam, preferably ethylene propylene diene monomer rubber foam, and/or silicone foam, and/or wherein the spring device (3) comprises a steel material.

7. The tunable mass damper (1) according to any one of the preceding claims, wherein in a state in which the elastomer cushion (4) is not compressed, the elastomer cushion (4) comprises a substantially uniform thickness in the height (H) dimension.

8. The tunable mass damper (1) according to any one of the preceding claims, wherein the spring arm (32) comprises a contact section (32a) and an adjustment section (32b), wherein the adjustment section (32b) is arranged in a circumferential direction around the central fixing portion (31) and comprises the connection point (33), and wherein the contact section (32a) comprises the contact area (34) and extends in a radial direction to connect the central fixing portion (31) with the adjustment section (32b).

9. The tunable mass damper (1) according to any of the preceding claims, wherein the tunable mass damper (1) further comprises a cover plate (5) that covers the spring device (3), wherein the spring device (3) is disposed between the cover plate (4) and the damping mass (2).

10. The tunable mass damper (1) according to any one of the preceding claims, wherein the spring device (3) comprises at least three spring arms (32).

11. The tunable mass damper (1) according to claim 10, wherein the spring arms (32) are formed as a single-piece component and/or the spring device (3) is formed as a single-piece component.

12. The tunable mass damper (1) according to claim 10 or 11, wherein the at least three spring arms (32) are at least essentially identical.

13. The tunable mass damper (1) according to any one of the claims 10 to 12, wherein the spring device (3) comprises three spring arms (32).

14. The tunable mass damper (1) according to claims 10 to 13, wherein the spring device (3) comprises essentially an n-fold rotational symmetry, wherein n is the number of the spring arms (32).

15. The tunable mass damper (1) according to claims 10 to 14, wherein a central axis (C) that is directed perpendicular to the spring arms (32) runs through the central fixing portion (31), and wherein a center of mass (21) of the damping mass (2) is located on the central axis (C).

16. The tunable mass damper (1) according to claims 10 to 15, wherein at least one spring arm (32) comprises a grip section configured to aid rotation of the spring device (3).

17. A building (200), preferably a tall, slender building, comprising at least one tunable mass damper (1) according to any one of the claims 1 to 16.
